# EUROPÄISCHE PATENTSCHRIFT

(11) **EP 2 517 340 B1**
(45) Veröffentlichungstag und Bekanntmachung des Hinweises auf die Patenterteilung: **31.01.2018**
(21) Anmeldenummer: 10798556.6
(22) Anmeldetag: 21.12.2010
(51) Int. Cl.: H02K 17/16, H02K 17/26, H02K 1/27, H02K 15/03

(54) **ROTOR MIT KURZSCHLUSSKÄFIG**
ROTOR HAVING A SHORT CIRCUIT CAGE
ROTOR COMPRENANT UNE CAGE EN COURT-CIRCUIT

(30) Priorität: 22.12.2009 DE 102009060438
(43) Veröffentlichungstag der Anmeldung: 31.10.2012
(73) Patentinhaber: KSB Aktiengesellschaft, 67227 Frankenthal (DE)
(72) Erfinder: HUTH, Gerhard, 97618 Hohenroth-Leutershausen (DE); URSCHEL, Sven, 67281 Kirchheim an der Weinstraße (DE); FISCHER, Ralf, 66265 Heusweiler (DE)
(86) Internationale Anmeldenummer: PCT/EP2010/070350
(87) Internationale Veröffentlichungsnummer: WO 2011/076777

(56) Entgegenhaltungen:
- EP-A1- 0 678 967
- WO-A1-2005/027308
- DE-A1- 3 609 750
- JP-A- 2005 269 707
- US-A- 5 758 709

## Beschreibung

Die Erfindung betrifft einen Rotor mit Kurzschlusskäfig und auf dem Umfang verteilten Permanentmagneten, wobei der Rotor ein über den gesamten Rotorbereich sich erstreckendes Blechpaket mit längs durchgehenden Rotornuten aufweist, wobei der Kurzschlusskäfig die Rotornuten in der vollen Länge des Blechpakets durchzieht, wobei der Kurzschlusskäfig mit in den Rotornuten einliegenden, vorzugsweise eingegossenen, Käfigstäben und die Käfigstäbe auf beiden Stirnseiten des Blechpakets verbindenden Kurzschlussringen ausgebildet ist, wobei ein Rotorbereich um mindestens die radiale Stärke der Permanentmagnete im Radius reduziert ist. Die Erfindung betrifft weiterhin einen Elektromotor mit einem solchen Rotor und eine mit einem solchen Elektromotor ausgestattete Kreiselpumpe. Die Erfindung betrifft weiterhin ein Verfahren zum Betrieb eines mit einem solchen Rotor ausgestatteten Elektromotors sowie ein Verfahren zur Herstellung eines solchen Rotors und/oder Elektromotors.

Durch die DE 36 09 750 A1 ist eine als kombinierte Synchron-Asynchronmaschine ausgebildete elektrische Maschine mit einem Stator und mit einem im Stator drehbar angeordneten Rotor bekannt. In Axialrichtung gesehen ist der Rotor in drei Rotorbereiche unterteilt von denen mindestens einer nach Art eines Synchronrotors Permanentmagnete trägt und mindestens einer nach Art eines Asynchronrotors mit einer in Rotornuten einliegenden Kurzschlusswicklung versehen ist. Der Rotor weist ein über alle drei Rotorbereiche sich erstreckendes Blechpaket mit längs durchgehenden Rotornuten auf und das Blechpaket mit Rotornuten ist im Synchronrotorbereich um mindestens die radiale Stärke der I'ermanentmagnetsegmente im Radius reduziert. Bei dem gezeigten Treppenläufer handelt es sich um einen speziellen Aufbau eines Rotors, dessen Fertigung entsprechend aufwändig und mit hohen Kosten verbunden ist. Außerdem werden bei dieser Läuferkonstruktion nur jeweils die zuständigen Rotorbereiche für die jeweilige Betriebsart, also synchroner Lauf oder asynchroner Lauf, genutzt. Ein solcher Aufbau ist daher unter heutigen Energieeffizienzforderungen nicht sinnvoll.

Der Rotor der US 4 454 438 weist Permanentmagnete auf, die am äußeren Umfang des Rotorkerns angeordnet sind. Entweder ist ein Magnetring auf das Blechpaket aufgebracht oder die Permanentsegmente sind in Taschen angeordnet. Ein Magnetring ist teuer und aufwändig in der Herstellung und die in Taschen einzupressenden Permanentmagnete sind passgenau zu fertigen. Auch bei diesem Rotor handelt es sich um eine spezielle Konstruktion, deren Herstellung viele und aufwändige Arbeitsschritte erfordert.

Die EP 0 678 967 A1 offenbart einen Rotor für einen Line-Start-Permanentmagnetrotor, auf dem streifenförmige Permanentmagnete aufgebracht sind.

Die JP 2005 269707 A offenbart einen Rotor mit Kurzschlusskäfig, an dessen Oberfläche Permanentmagnete eingebettet sind.

Die WO 2005/027308 A1 zeigt eine aus einem mit Wicklungssystem versehenen Stator und einem Rotor bestehende elektrische Maschine, die Mittel zum Dämpfen von Luftspaltfeldern aufweist.

Aufgabe der vorliegenden Erfindung ist es, einen Rotor zu schaffen, der wenig aufwändig und einfach erstellbar ist und gleichzeitig einen effizienten Betrieb gewährleistet.

Diese Aufgabe wird erfindungsgemäß dadurch gelöst, dass der Rotor in der vollen Länge zwischen den Kurzschlussringen durch Abdrehen im Radius derart reduziert ist, dass die Käfigstäbe oder mit diesen verbundene Käfigstege in ihrer radialen Höhe reduziert sind, und auf dem Rotor Permanentmagnete aufgebracht sind. Die Erfindung ermöglicht es, einen handelsüblichen Käfigläufer durch einfache Drehbearbeitung, nachfolgend Ab- oder Eindrehen genannt, zu modifizieren, so dass anschließend die Magnetmontage innerhalb des durch die Radiusreduzierung erhaltenen Freiraums erfolgen kann. Auf der durch die Radiusreduzierung erhaltenen Rotoroberfläche sind in voller Länge zwischen den Kurzschlussringen Permanentmagnete aufgebracht. Da der Käfigläufer nach dem Druckguss stets überdreht werden muss, ist somit kein zusätzlicher Arbeitsgang notwendig, es wird lediglich etwas mehr Material abgetragen. Erfindungsgemäß wurde erkannt, dass auch ein abgedrehter Anlaufkäfig eine ausreichende Wirkung entfaltet. Ein durch Abdrehen eines handelsüblichen Käfigläufers entstandener Rotor unterstützt sowohl einen asynchronen Anlauf als auch durch die Bestückung mit Permanentmagneten einen synchronen Lauf. Somit ermöglicht die Erfindung ein wirtschaftliches Herstellen von zwei verschiedenen Motortypen, da erst innerhalb eines Fertigungsprozesses zu entscheiden ist, ob ein normaler Asynchronmotor mit handelsüblichem Käfigläuferaufbau oder ein abgewandelter Permanentmagnetläufer aus einem abgedrehten Käfigläufer zu produzieren ist. Das konstruktive Konzept ermöglicht also eine Fertigungslinie für zwei Motorvarianten, sowohl für asynchrone Käfigläufermotoren als auch Permanentmagnet-Line-Start-Motoren.
Eine Ausgestaltung der Erfindung sieht vor, dass die Permanentmagnete durch eine Bandage oder eine, vorzugsweise dünne, amagnetische Hülse gesichert sind. Dabei ist es von Vorteil, das die Kurzschlussringe zu einem Teil abgedreht sind, so dass beispielsweise beidseitig des Blechpakets Auflageflächen ausgebildet sind. Die Auflageflächen dienen einer Fixierung der Bandage oder einer Auflage der amagnetischen Läuferhülse. Die teilweise abgedrehten Kurzschlussringe dienen der Anfang- und Endfixierung der Bandage beziehungsweise der Auflage einer dünnen amagnetischen Läuferhülse. Bei einer Verwendung einer amagnetischen Läuferhülse hat es sich ebenfalls bewährt, die Kurzschlussringe einseitig nur in einem inneren, dem Blechpaket zugewandten, Bereich abzudrehen, so dass ein Absatz entsteht, der als Anschlag für die Läuferhülse dient. Eine beidseitige, nur in den inneren Teilbereichen der Kurzschlussringe erfolgende Abdrehung bietet sich bei einer Läuferbandage an. Dadurch sind die Kurzschlussringe mit in die Konstruktion des Rotors einbezogen. Zusätzliche Mittel zur Fixierung wie etwa Endplatten sind nicht erforderlich.

Vorteilhafterweise sind die die Pole bildenden Magnetflächen durch Teilmagnete, vorzugsweise Seltenerd-Teilmagnete, insbesondere durch NdFeB-Magnete, aufgebaut. Die Verwendung von Seltenerd-Magneten ermöglicht eine vergleichsweise geringe Magnethöhe, was für die Wirkung des abgedrehten Anlaufkäfigs von Vorteil ist. Es hat sich als zweckmäßig erwiesen, dass die Magnethöhe zwischen 5 und 20%, vorzugsweise in etwa 10%, der Käfigstabhöhe beträgt. Im untersuchten Leistungsbereich hat sich eine Magnethöhe von in etwa 2 mm bewährt. Seltenerd-Magnete besitzen darüber hinaus eine hohe Gegenfeldstabilität, was dazu führt, dass diese auch aufgrund hoher Anlaufströme entstehender Magnetfelder nicht entmagnetisiert werden. Die Teilmagnete können in axialer Richtung zueinander versetzt oder gestaffelt angeordnet sein. Eine solche gestaffelte Anordnung von benachbarten Teilmagneten führt aufgrund der entstehenden Berührungsnutversatze zu einer Reduzierung der Momentenwelligkeit im Betrieb des Rotors.

Nach einer weiteren Ausgestaltung beträgt die Rotorbedeckung mit Permanentmagneten, also die Polbedeckung, zwischen 65 und 90%, vorzugsweise zwischen 70 und 80%. Es hat sich als zweckmäßig erwiesen, den Rotor nicht komplett in Umfangsrichtung mit Magneten zu bestücken, sondern eine Polbedeckung zwischen 65 und 90%, vorzugsweise zwischen 70 und 80% zu wählen.

Weitere Ausgestaltungen der Erfindung betreffen eine optimierte Läufernutform. Dabei hat es sich als zweckmäßig erwiesen, die Läufernutform derart zu gestalten, dass die Läufernutform sowohl im abgedrehten Zustand als auch im nicht abgedrehten Zustand des Käfigläufers gute Motorbetriebseigenschaften bedingt. Es hat sich als zweckmäßig erwiesen, wenn die Käfigstäbe des abgedrehten Rotors ihre ursprüngliche Form beibehalten. Insbesondere sind die Käfigstäbe des abgedrehten Rotors tropfenförmig ausgebildet.

Ausgehend von einem herkömmlichen Rotor mit Kurzschlusskäfig, wobei der Rotor ein über den gesamten Rotorbereich sich erstreckendes Blechpaket mit längs durchgehenden Rotornuten aufweist, wobei der Kurzschlusskäfig die Rotornuten in der vollen Länge des Blechpakets durchzieht, der Kurzschlusskäfig mit in den Rotornuten einliegenden, vorzugsweise eingegossenen, Käfigstäben und die Käfigstäbe auf beiden Stirnseiten des Blechpakets verbindenden Kurzschlussringen ausgebildet ist, ist es vorgesehen, dass der Rotor in einem radial äußeren Bereich, vorzugsweise entsprechend mindestens der radialen Stärke von im Falle eines Synchronrotors aufzubringender Permanentmagnete, insbesondere schlitzförmige, Käfigstege aufweist, die mit in einem radial inneren Bereich des Rotors liegenden, insbesondere tropfenförmigen, Käfigstäben verbunden sind. Dadurch ist der asynchron betreibbare Rotor in der vollen Länge zwischen den Kurzschlussringen im Radius um mindestens die radiale Stärke von im Falle eines zu fertigenden Synchronrotors aufzubringenden Permanentmagneten derart reduzierbar, dass die mit den Käfigstäben verbundenen Käfigstege in ihrer radialen Höhe reduziert werden und die Käfigstäbe in ihrer Form erhalten bleiben. Der nicht eingedrehte Rotor weist dazu Läufernuten auf, die in einem radial äußeren Bereich, vorzugsweise entsprechend mindestens der radialen Stärke der Permanentmagnete, insbesondere schlitzförmige, Käfigstege und in einem radial inneren Bereich, insbesondere tropfenförmige, Käfigstäbe bilden. Dabei ist die untere, insbesondere tropfenförmige, Gestaltung des Käfigstabes auf die Stegkontur, insbesondere den Schlitz, angepasst ausgeführt. Versuche haben gezeigt, dass es günstig ist, die, insbesondere tropfenförmige, Stabkontur im oberen Bereich etwas breiter und dafür insgesamt kürzer als üblich auszuführen.
Die Erfindung umfasst nicht nur den Rotor an sich, sondern schließt einen mit einem erfindungsgemäßen Rotor ausgestatteten Elektromotor mit ein. Eine Kreiselpumpenanordnung gekennzeichnet durch einen erfindungsgemäßen Elektromotor liegt ebenfalls im Rahmen der Erfindung. Durch die Erfindung sind beispielsweise mit einem erfindungsgemäßen Elektromotor ausgestattete Spaltrohrmotorpumpen und Unterwassermotorpumpen energieeffizient betreibbar.

Aufgrund der Selbstanlaufeigenschaften des erfindungsgemäßen Rotors kann ein damit ausgestatteter Elektromotor und/oder eine Kreiselpumpe mit einem solchen Elektromotor durch ein ein- oder mehrphasiges, starres Spannungsnetz gespeist werden, also direkt an einem Spannungsnetz starrer Frequenz betrieben werden.

Ein weiteres Verfahren sieht vor, dass die Speisung des Elektromotors durch einen Frequenzumrichter, vorzugsweise ohne Erfassung der Rotorlage, erfolgt. Durch den Frequenzumrichter ist der Elektromotor in seiner Drehzahl variabel regelbar. Durch die Erfindung ist dabei die Möglichkeit eröffnet, die Speisung des Elektromotors durch einen Frequenzumrichter üblicher, also nicht spezialisierter Bauart übernehmen zu lassen. Zur Ansteuerung kann auf eine Erfassung der Rotorposition verzichtet werden, was den Aufbau des Frequenzumrichters erheblich vereinfacht. Es können herkömmliche Umrichter mit U/f-Kennliniensteuerung verwendet werden. Im Falle eines asynchronen Laufs, wie er bei einem Abriss des Permanentmagnet-Rotors auftritt, werden in den Käfig des Rotors Spannungen induziert, welche einen Stromfluss zur Folge haben. Zusammen mit den Magnetflusslinien des Stators erfolgt eine Kraftwirkung auf den Rotor, so dass der Rotor die durch den U/f-Umrichter veränderliche synchrone Drehzahl wieder annimmt.
Ein erfindungsgemäßes Verfahren zur Herstellung eines Rotors oder eines Elektromotors gemäß der Erfindung sieht vor, dass an einem herkömmlich gefertigten Käfigläufer über die gesamte Blechpaketlänge eine über den herkömmlichen Luftspalt hinausgehende zusätzliche radiale Durchmesser- oder Radiusreduzierung durch ein spanabhebendes Verfahren, nämlich eine Eindrehung, erfolgt, bei der der Käfigläufer in der vollen Länge zwischen den Kurzschlussringen im Radius derart reduziert wird, dass dessen Käfigstäbe oder mit diesen verbundene Käfigstege in ihrer radialen Höhe reduziert werden, und anschließend auf die Rotoroberfläche Permanentmagnete aufgebracht werden. Es wird ein handelsüblicher Käfigläufer durch einfache Drehbearbeitung modifiziert, so dass anschließend die Magnetmontage erfolgen kann. Ein herkömmlich gefertigter Käfigläufer muss nach dem Druckguss ohnehin überdreht werden, um im im Stator eingebauten Zustand einen Luftspalt zu erlangen. Somit ist durch die Erfindung kein zusätzlicher Arbeitsgang notwendig, es wird lediglich etwas mehr Material abgetragen.

Es hat sich als zweckmäßig erwiesen, die Permanentmagnete in den durch die Radiusreduzierung entstehenden Freiraum, insbesondere in die Eindrehung, einzukleben. Neben einer Befestigung der Magnete am Rotor dient das Einkleben der Magnete aufgrund des entstehenden Klebefilms zwischen Magneten und Rotorblechpaket mit Käfigstäben der galvanischen Trennung. Bei kleinen Stückzahlen kann eine manuelle Bestückung mit bereits magnetisierten Schalenmagneten erfolgen.

Für größere Stückzahlen eignet sich ein Verfahren, wonach die, vorzugsweise automatisiert auf den Käfigläufer aufgebrachten, Permanentmagnete mittels eines Magnetisierungsjoches magnetisiert werden.

Zur Sicherung der Permanentmagnete kann auf die Permanentmagnete eine Bandage oder eine, vorzugsweise dünne, amagnetische Hülse aufgebracht werden. Dabei ist es von Vorteil, wenn die Kurzschlussringe ebenfalls eingedreht werden und die Bandage oder die amagnetische Hülse durch die Kurzschlussringe fixiert oder gestützt werden. Die abgedrehten Kurzschlussringe bilden so eine Auflagefläche oder Absatzfläche für eine Anfangs- und/oder Endfixierung der Bandage oder der Hülse aus.

Ausführungsbeispiele der Erfindung sind in den Zeichnungen dargestellt und werden im Folgenden näher beschrieben. Es zeigen die
- Fig. 1: eine schematische Schnittdarstellung eines Käfigläuferaktivteils nach dem Stand der Technik, die
- Fig. 2: eine schematische Schnittdarstellung eines erfindungsgemäßen Rotors mit zusätzlicher Magnetbestückung, die
- Fig. 3: eine schematische Schnittdarstellung eines anderen erfindungsgemäßen Rotors mit Auflageflächen ausbildenden Kurzschlussringen, die
- Fig. 4: eine andere Schnittdarstellung eines Rotors mit eingedrehten Käfigstäben, die
- Fig. 5 a, b: Schnittdarstellungen eines nicht eingedrehten Rotors mit einer optimierten Läufernutform und eines daraus gefertigten eingedrehten Rotors, die
- Fig. 6: eine Draufsicht auf einen Rotor mit in axialer Richtung versetzt angeordneten Magneten, und die
- Fig. 7: eine prinzipielle Darstellung eines Antriebskonzept einer Kreiselpumpenanordnung mit mit einem erfindungsgemäßen Rotor ausgestatteten Elektromotor.

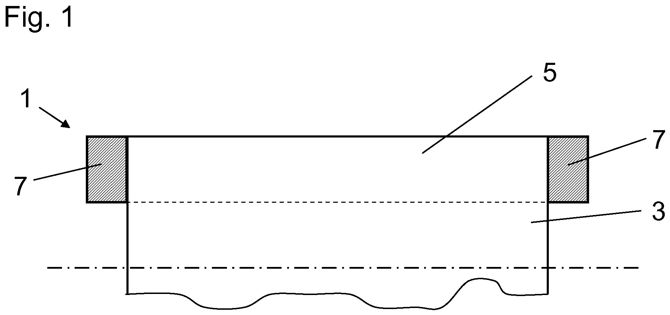

Die Fig. 1 zeigt einen Käfigläuferaktivteil 1 eines Käfigläufers gemäß dem Stand der Technik in einer schematischen Schnittdarstellung. Aus Gründen der Übersichtlichkeit wurde auf die Darstellung einer Läuferwelle verzichtet. Innerhalb eines Läuferblechpakets 3 befinden sich Käfigstäbe 5, die an beiden Enden des Läuferaktivteils 1 durch Kurzschlussringe 7 verbunden sind. Die Käfigstäbe 5 durchziehen dabei die Rotornuten in der vollen Länge des Blechpaketes 3. Dabei bilden die in die Rotornuten eingegossenen Käfigstäbe 5 und die die Käfigstäbe 5 auf beiden Stirnseiten des Blechpakets 3 verbindenden Kurzschlussringe 7 einen Kurzschlusskäfig. Üblicherweise wird ein solcher Käfigläufer in Aluminium- oder Kupferdruckgusstechnik hergestellt. Der erforderliche geometrische Luftspalt zwischen Ständer eines Elektromotors und des Läufers 1 wird üblicherweise durch Abdrehen des Läufers erhalten.

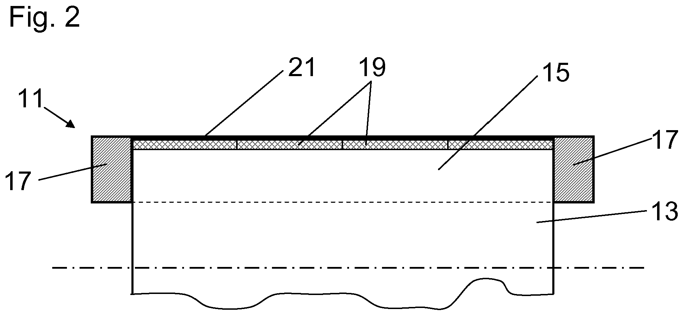

Die Fig. 2 zeigt - ebenfalls in einer schematischen Schnittdarstellung - einen erfindungsgemäßen Rotor 11, der aus einem Käfigläuferaktivteil 1 gemäß dem Stand der Technik hergestellt ist. Der Rotor 11 weist ein Läuferblechpaket 13, Käfigstäbe 15 und Kurzschlussringe 17 auf. Das Läuferblechpaket 13 des erfindungsgemäßen Rotors 11 ist durch spanabhebende Bearbeitung in der vollen Länge zwischen den Kurzschlussringen 17 im Radius derart reduziert, dass die Käfigstäbe 15 in ihrer radialen Höhe reduziert sind. Auf dem Läuferblechpaket 13 sind Permanentmagnetschalen 19 aufgebracht, die in diesem Ausführungsbeispiel durch eine Läuferbandage 21 gesichert sind. Der Rotor 11 entsteht durch eine Weiterbearbeitung eines Käfigläufers 1 gemäß dem Stand der Technik, indem zusätzlich zur spanabhebenden Bearbeitung, insbesondere Ab- oder Eindrehung, zum Erhalten des erforderlichen geometrischen Luftspaltes zwischen Ständer eines Elektromotors und Läufer am Läuferpaket noch eine zusätzliche spanabhebende Bearbeitung, nämlich Ab- oder Eindrehung, vorgenommen wird. In den durch die spanabhebende Bearbeitung entstehenden Freiraum, insbesondere die Eindrehung, werden anschließend die Schalenmagnete 19 eingeklebt. Die Schalenmagnete 19 können bereits magnetisiert sein, es ist aber auch eine nachträgliche Magnetisierung der Schalenmagnete mittels eines Magnetisierungsjochs vorgesehen. Nach der Bestückung der Schalenmagnete 19 erhält der Läufer eine Bandage 21 zur Sicherung der Magnete 19. Alternativ kann die Sicherung der Magnete durch eine, vorzugsweise dünne, amagnetische Hülse erfolgen. Diese kann beispielsweise über die Magnetschalen geschoben werden.

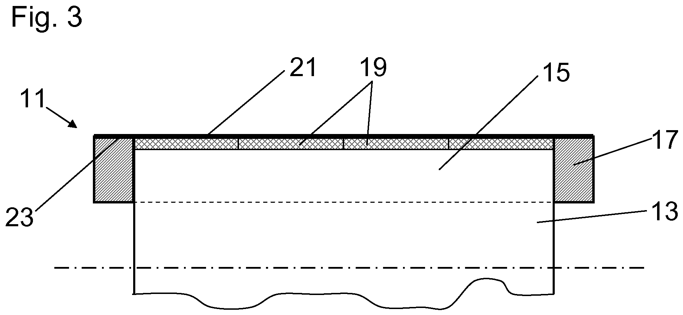

Die Fig. 3 zeigt eine alternative Ausgestaltung eines Käfigläufers 11. Hier sind die Kurzschlussringe 17 zu einem Teil abgedreht, so dass beidseitig des Blechpakets 13 Auflageflächen 23 gebildet werden. Die Auflageflächen 23 dienen einer Fixierung der Bandage 21 oder einer Auflage einer amagnetischen Läuferhülse. Bei einer Verwendung einer amagnetischen Läuferhülse hat es sich ebenfalls bewährt, die Kurzschlussringe einseitig nur in einem inneren, dem Blechpaket zugewandten, Bereich abzudrehen, so dass ein Absatz entsteht, der als Anschlag für die Läuferhülse dient. Eine beidseitige, nur in den inneren Teilbereichen der Kurzschlussringe erfolgende Abdrehung bietet sich bei einer Läuferbandage an. Die Kurzschlussringe 17 sind somit in die Konstruktion des Rotors einbezogen und zusätzliche Fixiermittel, wie etwa Endplatten, sind nicht erforderlich.

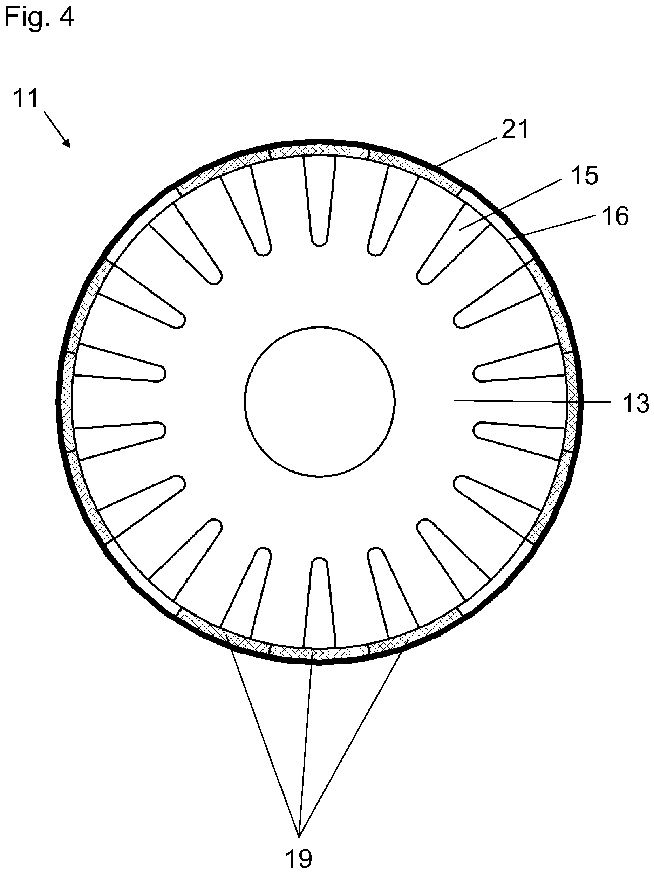

Die Fig. 4 zeigt eine andere Schnittdarstellung eines Rotors 11 mit eingedrehten Käfigstäben 15. In dieser Darstellung sind deutlich die ein- oder abgedrehten Käfigstäbe 15 im Läuferblechpaket 13 zu erkennen. Auf die Rotoroberfläche 16 sind Magnetschalen 19 aufgeklebt, wobei das Klebemittel als Isolation dient. Der Klebefilm trennt dabei die Magnete 19 galvanisch von der Rotoroberfläche 16 des abgedrehten Rotors 11. Zur Fixierung der Magnetschalen 19 ist eine Bandage oder eine amagnetische Edelstahlhülse 21 vorgesehen. Gemäß der Erfindung ist der Rotor 11 in der vollen Länge zwischen seinen Kurzschlussringen 17 im Radius reduziert, so dass die Käfigstäbe 15 ebenfalls in ihrer vollen Länge zwischen den Kurzschlussringen 17 in ihrer radialen Höhe reduziert sind, so dass auf dem Blechpaket 13 die Permanentmagnete 19 aufbringbar sind. Erfindungsgemäß wurde erkannt, dass auch ein abgedrehter Anlaufkäfig eine ausreichende Wirkung entfaltet. Ein durch Abdrehen eines handelsüblichen Käfigläufers entstandener Rotor unterstützt sowohl einen asynchronen Anlauf, als auch durch die Bestückung mit Permanentmagneten einen synchronen Lauf. Somit ermöglicht die Erfindung ein wirtschaftliches Herstellen von zwei verschiedenen Motortypen, wobei erst innerhalb eines Fertigungsprozesses zu entscheiden ist, ob ein normaler Asynchronmotor mit handelsüblichem Käfigläuferaufbau oder ein abgewandelter Permanentmagnetläufer synchroner Bauart aus einem abgedrehten Käfigläufer zu produzieren ist.

Der Rotor 11 ist nicht komplett in Umfangsrichtung mit Magneten 19 bestückt, sondern besitzt eine Polbedeckung zwischen 70 und 80%. Mehrere Magnetschalen 19 bilden dabei einen Magnetpol. Vorteilhafterweise sind die Pole bildenden Magnetflächen durch Teilmagnete aus Seltenerdmaterial, insbesondere aus NdFeB-Magneten aufgebaut. Bei der Verwendung von Seltenerdmagneten ist eine vergleichsweise geringe Magnethöhe erforderlich, um eine ausreichende Wirkung zu erzielen. Darüber hinaus besitzen solche Magnete eine hohe Gegenfeldstabilität, was dazu führt, dass diese auch auf Grund hoher Anlaufströme entstehender Magnetfelder nicht entmagnetisiert werden.

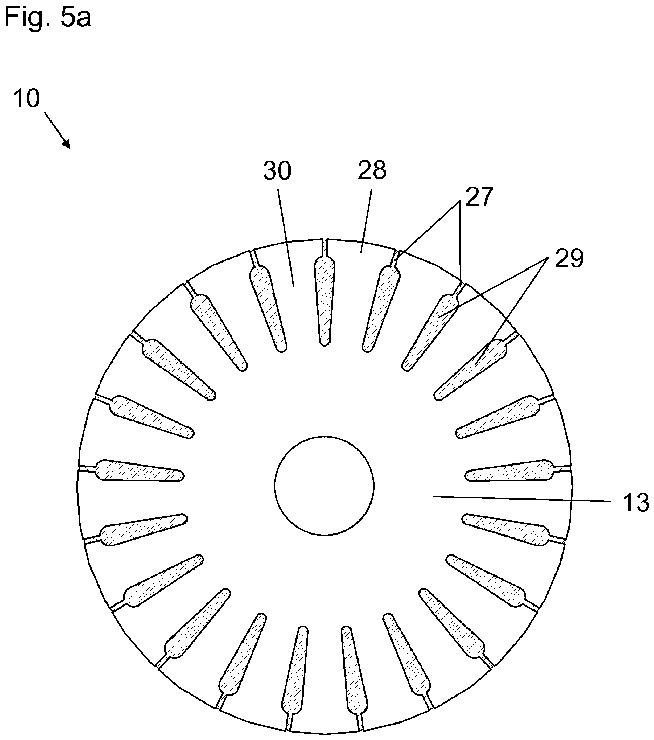

Die Fig. 5a zeigt eine Schnittdarstellung eines nicht eingedrehten Rotors 10 mit einer optimierten Läufernutform. Die in diesem Ausführungsbeispiel verwendete Läufernutform zeichnet sich durch einen vergrößerten Stegbereich 27 und tiefer liegenden Käfigstäben 29 aus. Der Rotor 10 besitzt also ausgeprägte oder vergrößerte Käfigstege 27. Eine solche Läufernutform stellt sowohl im nicht abgedrehten Zustand, als auch im abgedrehten Zustand des Rotors 11 gute Motorbetriebseigenschaften sicher. Der nicht eingedrehte Rotor 10 weist nämlich Läufernuten auf, die in einem radial äußeren Bereich 28 vorzugsweise entsprechend mindestens der radialen Stärke der Permanentmagnete als schlitzförmige Stege und in einem radial inneren Bereich 30 als tropfenförmige Stäbe ausgebildet sind. In dieser Form eignet sich der Rotor 10 als Rotor für einen Käfigläufer einer Asynchronmaschine.

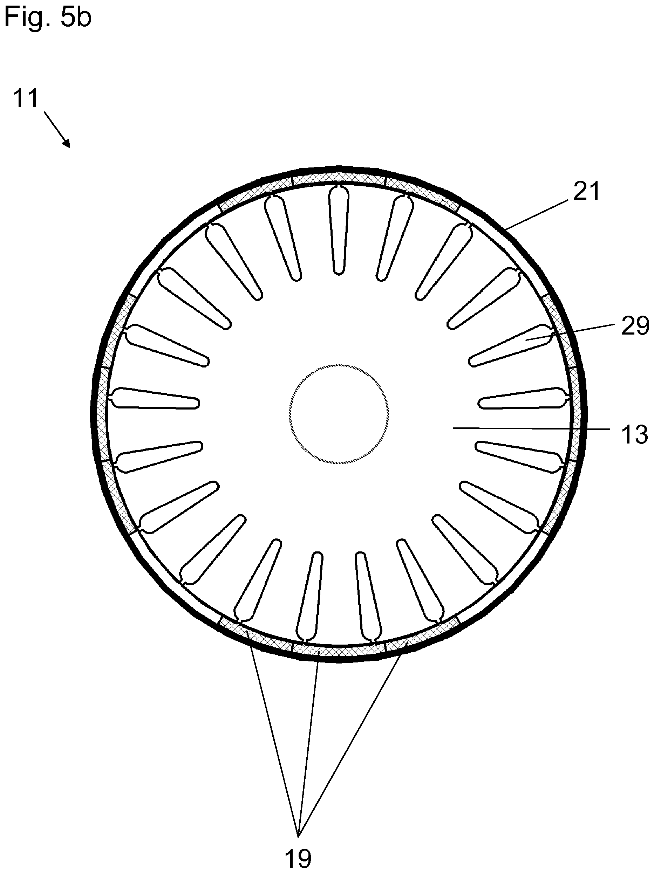

Die Fig. 5b zeigt nun eine aus einem Rotor 10 gemäß Fig. 5a entstandenen Rotor 11 synchroner Bauart. Die tiefer im Läuferblechpaket 13 liegenden tropfenförmigen Stäbe 29 bleiben auch nach einem Abdrehen vollständig in ihrer Form erhalten. Dies bedingt gute Motorbetriebseigenschaften. Die Abdrehtiefe zwischen Radius des Asynchronrotors 10 und Radius des Synchronrotors 11 unterscheiden sich nur um die Höhe der Magnete 19, die Dicke einer üblicherweise vorgesehenen Bandage 21 und die Differenz der Luftspaltweiten zwischen den beiden Motoren. Es ist ersichtlich, dass bei der gemäß Fig. 5a gezeigten optimierten Läufernutform bei dem abgedrehten Rotor gemäß Fig. 5b die Käfigstäbe tropfenförmig erhalten bleiben, was gute Motorbetriebseigenschaften bedingt. Durch die Erfindung ist ein Baukastenkonzept geschaffen, durch das erst bei der Herstellung eines Rotors eine Entscheidung zu treffen ist, ob ein herkömmlicher Motor in Asynchrontechnik oder ein Motor in Synchrontechnik hergestellt werden soll.

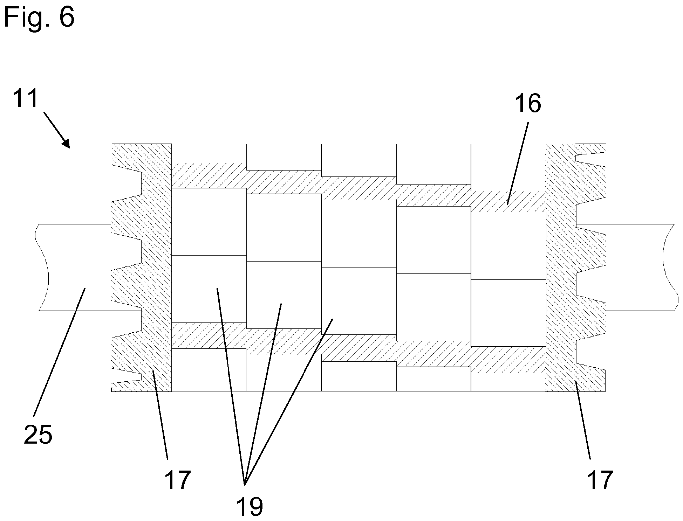

Fig. 6 zeigt eine Draufsicht auf einen auf einer Welle 25 angeordneten Rotor 11. Erkennbar sind die Kurzschlussringe 17 auf beiden Stirnseiten des Blechpaketes und die auf dem abgedrehten Rotor 11 und seiner Rotoroberfläche 16 aufgebrachten Magnete 19. In Umfangsrichtung sind die Magnete 19 gleichmäßig oder symmetrisch auf der Rotoroberfläche 16 verteilt. Ein Magnetpol wird aus mehreren Teilmagneten gebildet. Die Teilmagnete sind in axialer Richtung zueinander versetzt oder gestaffelt angeordnet. Diese gestaffelte Anordnung von benachbarten Teilmagneten führt auf Grund der entstehenden Berührungsnutversatze zu einer Reduzierung der Momentenwelligkeit im Betrieb des Rotors 11.

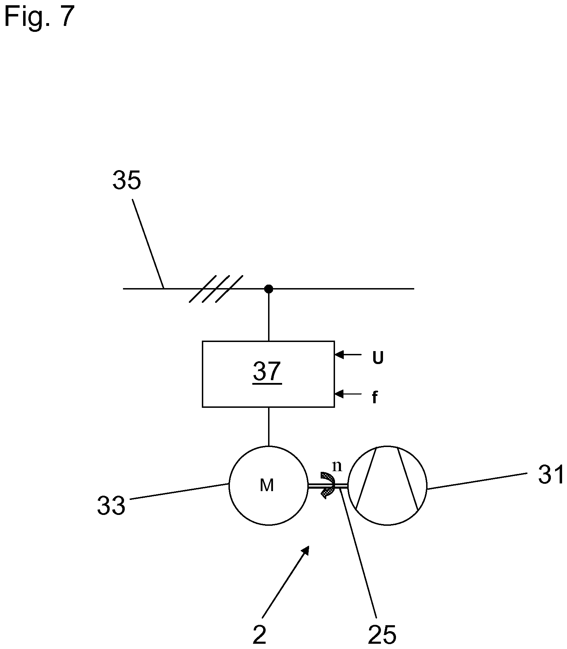

Die Fig. 7 zeigt eine Kreiselpumpenanordnung 2 mit mit einem erfindungsgemäßen Rotor 11 ausgestatteten Elektromotor 33 und eine prinzipielle Darstellung eines Antriebskonzepts der Kreiselpumpenanordnung 2. Eine Kreiselpumpe 31 wird über eine Welle 25 von einem Elektromotor 33, der mit einem erfindungsgemäßen Rotor ausgestattet ist, angetrieben. Auf Grund der Selbstanlaufeigenschaften des erfindungsgemäßen Rotors kann der damit ausgestattete Elektromotor 33 und/oder die Kreiselpumpe 31 durch ein ein- oder mehrphasiges starres Spannungsnetz 35 gespeist werden, also direkt an dem Spannungsnetz 35 starrer Frequenz betrieben werden. In diesem Ausführungsbeispiel wird der Elektromotor 33 durch einen Frequenzumrichter 37 in seiner Drehzahl n variabel geregelt. Die Speisung des Elektromotors 33 erfolgt dabei durch einen Frequenzumrichter 37 üblicher, also nicht spezialisierter Bauart. Zur Ansteuerung des mit einem erfindungsgemäßen Rotor ausgestatteten Elektromotors kann nämlich auf eine Erfassung der Rotorposition verzichtet werden, wodurch ein herkömmlicher Umrichter 37 mit U/f-Kennliniensteuerung verwendet werden kann. Dieses Antriebskonzept ist für drehzahlveränderbare Kreiselpumpen geeignet und gestattet einen Betrieb am Umrichter ohne Rotorlageerfassung. Des Weiteren ist ein Notlaufbetrieb am starren Drehstromnetz ermöglicht. Es können also einfache U/f-Umrichter zum Einsatz kommen, die üblicherweise bei Pumpenantrieben in Asynchrontechnik Verwendung finden. Es wird kein Gebersystem für die Erfassung der Rotorlageposition benötigt und damit entfällt auch die sonst zusätzlich notwendige Signalleitung zwischen Motor und Umrichter sowie die Auswerteelektronik im Umrichter. Im stationären synchronen Betrieb besteht eine hohe Energieeffizienz auf Grund der Permanentmagneterregung.

## Patentansprüche

1. Rotor (11) mit Kurzschlusskäfig und auf dem Umfang verteilten Permanentmagneten (19), wobei der Rotor (11) ein über den gesamten Rotorbereich sich erstreckendes Blechpaket mit längs durchgehenden Rotornuten aufweist, wobei der Kurzschlusskäfig die Rotornuten in der vollen Länge des Blechpakets durchzieht, wobei der Kurzschlusskäfig mit in den Rotornuten einliegenden, vorzugsweise eingegossenen, Käfigstäben (15, 29) und die Käfigstäbe (15, 29) auf beiden Stirnseiten des Blechpakets verbindenden Kurzschlussringen (17) ausgebildet ist, wobei ein Rotorbereich um mindestens die radiale Stärke der Permanentmagnete (19) im Radius reduziert ist,
**dadurch gekenntzeichnet, dass**
der Rotor (11) in der vollen Länge zwischen den Kurzschlussringen (17) durch Abdrehen im Radius derart reduziert ist, dass die Käfigstäbe (15, 29) oder mit diesen verbundene Käfigstege (27) in ihrer radialen Höhe reduziert sind, und auf dem Rotor (11) Permanentmagnete (19) aufgebracht sind.

2. Rotor nach Anspruch 1, **dadurch gekennzeichnet, dass** die Permanentmagnete (19) durch eine Bandage (21) oder eine amagnetische Hülse gesichert sind.

3. Rotor nach Anspruch 2, **dadurch gekennzeichnet, dass** die Kurzschlussringe (17) zu einem Teil abgedreht sind.

4. Rotor nach Anspruch 1, 2 oder 3, **dadurch gekennzeichnet, dass** die Pole bildenden Magnetflächen durch Teilmagnete, vorzugsweise Seltenerd-Teilmagnete, aufgebaut sind.

5. Rotor nach Anspruch 4, **dadurch gekennzeichnet, dass** die Teilmagnete in axialer Richtung zueinander versetzt oder gestaffelt angeordnet sind.

6. Rotor nach einem der Ansprüche 1 bis 5, **dadurch gekennzeichnet, dass** die Polbedeckung mit Permanentmagneten (19) zwischen 70 und 80% beträgt.

7. Rotor nach einem der Ansprüche 1 bis 6, **dadurch gekennzeichnet, dass** die Käfigstäbe (29) des abgedrehten Rotors (11) ihrer ursprünglichen Form entsprechend, vorzugsweise tropfenförmig, ausgebildet sind.

8. Elektromotor **gekennzeichnet durch** einen Rotor (10, 11) nach einem der Ansprüche 1 bis 7.

9. Kreiselpurnpenanordnung **gekennzeichnet durch** einen Elektromotor (33) nach Anspruch 8.

10. Verfahren zum Betrieb eines Elektromotors nach Anspruch 8 und/oder einer Kreiselpurnpenanordnung nach Anspruch 9, **dadurch gekennzeichnet, dass** die Speisung des Elektromotors (33) durch ein Spannungsnetz (35) starrer Frequenz erfolgt.

11. Verfahren zum Betrieb eines Elektromotors nach Anspruch 8 und/oder einer Kreiselpurnpenanordnung nach Anspruch 9, **dadurch gekennzeichnet, dass** die Speisung des Elektromotors (33) durch einen Frequenzumrichter (37) ohne Erfassung der Rotorlage erfolgt.

12. Verfahren zur Herstellung eines Rotors (11), nach einem der Ansprüche 1 bis 7, oder eines Elektromotors (33) nach Anspruch 8, **dadurch gekennzeichnet, dass** an einem Käfigläufer (1, 10) über die gesamte Blechpaketlänge eine Radiusreduzierung durch eine Eindrehung erfolgt, bei der dieser in der vollen Länge zwischen den Kurzschlussringen (1, 7, 17) im Radius derart reduziert wird, dass dessen Käfigstäbe (15, 29) oder mit diesen verbundene Käfigstege (27) in ihrer radialen Höhe reduziert werden, und anschließend auf die Rotoroberfläche (16) Permanentmagnete (19) aufgebracht werden.

13. Verfahren nach Anspruch 12, **dadurch gekennzeichnet, dass** die Permanentmagnete (19) in den durch die Radiusreduzierung entstehenden Freiraum, insbesondere die Eindrehung, eingeklebt werden.

14. Verfahren nach Anspruch 12 oder 13, **dadurch gekennzeichnet, dass** die Permanentmagnete (19) vor der Bestückung magnetisiert sind oder nach dem Bestücken mittels eines Magnetisierungsjoches magnetisiert werden.

15. Verfahren nach Anspruch 12, 13 oder 14, **dadurch gekennzeichnet, dass** auf die Permanentmagnete (19) eine Bandage (21) oder eine amagnetische Hülse zur Sicherung der Permanentmagnete (19) aufgebracht wird.

16. Verfahren nach Anspruch 15, **dadurch gekennzeichnet, dass** die Kurzschlussringe (17) ebenfalls eingedreht werden und die Bandage (21) oder die amagnetische Hülse durch die Kurzschlussringe (17) fixiert werden.

## Claims

1. Rotor (11) having a squirrel cage and permanent magnets (19) distributed over the circumference, with the rotor (11) having a laminated core which extends over the entire rotor region and has longitudinally continuous rotor slots, with the squirrel cage passing through the rotor slots over the entire length of the laminated core, with the squirrel cage being formed with cage bars (15, 29) which are situated, preferably encapsulated, in the rotor slots and short-circuiting rings (17) which connect the cage bars (15, 29), on both end faces of the laminated core, with the radius of a rotor region being reduced by at least the radial thickness of the permanent magnets (19),
**characterized in that**
the radius of the rotor (11) over the entire length between the short-circuiting rings (17) is reduced by turning in such a way that the radial height of the cage bars (15, 29) or cage webs (27) which are connected to said cage bars is reduced, and permanent magnets (19) are mounted on the rotor (11).

2. Rotor according to Claim 1, **characterized in that** the permanent magnets (19) are secured by a binding (21) or a non-magnetic sleeve.

3. Rotor according to Claim 2, **characterized in that** the short-circuiting rings (17) are partially turned.

4. Rotor according to Claim 1, 2 or 3, **characterized in that** magnet surfaces which form the poles are formed by component magnets, preferably rare-earth component magnets.

5. Rotor according to Claim 4, **characterized in that** the component magnets are arranged so as to be offset or staggered in relation to one another in the axial direction.

6. Rotor according to one of Claims 1 to 5, **characterized in that** the pole coverage with permanent magnets (19) is between 70 and 80%.

7. Rotor according to one of Claims 1 to 6, **characterized in that** the cage bars (29) of the turned rotor (11) are formed in accordance with their original shape, preferably in the shape of a drop.

8. Electric motor **characterized by** a rotor (10, 11) according to one of Claims 1 to 7.

9. Centrifugal pump arrangement **characterized by** an electric motor (33) according to Claim 8.

10. Method for operating an electric motor according to Claim 8 and/or a centrifugal pump arrangement according to Claim 9, **characterized in that** the electric motor (33) is fed by a voltage supply system (35) with a fixed frequency.

11. Method for operating an electric motor according to Claim 8 and/or a centrifugal pump arrangement according to Claim 9, **characterized in that** the electric motor (33) is fed by a frequency converter (37) without the position of the rotor being detected.

12. Method for producing a rotor (11), according to one of Claims 1 to 7, or an electric motor (33) according to Claim 8, **characterized in that**, in the case of a cage rotor (1, 10), the radius is reduced over the entire length of the laminated core by a turning-in process, during which process the radius of said cage rotor is reduced over the entire length between the short-circuiting rings (1, 7, 17) in such a way that the radial height of the cage bars (15, 29) of said cage rotor or cage webs (27) which are connected to said cage bars is reduced, and then permanent magnets (19) are mounted on the rotor surface (16).

13. Method according to Claim 12, **characterized in that** the permanent magnets (19) are adhesively bonded in the clearance, in particular the groove, which is produced by reducing the radius.

14. Method according to Claim 12 or 13, **characterized in that** the permanent magnets (19) are magnetized before being fitted or are magnetized by means of a magnetizing yoke after being fitted.

15. Method according to Claim 12, 13 or 14, **characterized in that** a binding (21) or a non-magnetic sleeve for securing the permanent magnets (19) is mounted on the permanent magnets (19).

16. Method according to Claim 15, **characterized in that** the short-circuiting rings (17) are likewise turned and the binding (21) or the non-magnetic sleeve are fixed by the short-circuiting rings (17).

## Revendications

1. Rotor (11) comprenant une cage en court-circuit et des aimants permanents (19) répartis sur sa périphérie, dans lequel le rotor (11) présente un paquet de tôles s'étendant sur toute la région du rotor avec des encoches de rotor longitudinalement continues, dans lequel la cage en court-circuit traverse les encoches de rotor dans toute la longueur du paquet de tôles, dans lequel la cage en court-circuit est formée avec des barres de cage (15, 29) déposées, de préférence coulées, dans les encoches de rotor et avec des bagues de court-circuit (17) reliant les barres de cage (15, 29) sur les deux côtés frontaux du paquet de tôles, dans lequel une région de rotor présente un rayon réduit d'au moins l'épaisseur radiale des aimants permanents (19), **caractérisé en ce que** le rotor (11) présente un rayon réduit par tournage dans toute la longueur entre les bagues de court-circuit (17), de telle manière que les barres de cage (15, 29) ou des nervures de cage (27) reliées à celles-ci présentent une hauteur radiale réduite, et des aimants permanents (19) sont placés sur le rotor (11).

2. Rotor selon la revendication 1, **caractérisé en ce que** les aimants permanents (19) sont immobilisés par un bandage (21) ou par un manchon amagnétique.

3. Rotor selon la revendication 2, **caractérisé en ce que** les bagues de court-circuit (17) sont tournées en une partie.

4. Rotor selon la revendication 1, 2 ou 3, **caractérisé en ce que** les faces d'aimant formant des pôles sont constituées par des aimants partiels, de préférence des aimants partiels en terres rares.

5. Rotor selon la revendication 4, **caractérisé en ce que** les aimants partiels sont décalés en direction axiale l'un par rapport à l'autre ou sont disposés de façon échelonnée.

6. Rotor selon l'une quelconque des revendications 1 à 5, **caractérisé en ce que** la couverture polaire avec des aimants permanents (19) vaut entre 70 et 80 %.

7. Rotor selon l'une quelconque des revendications 1 à 6, **caractérisé en ce que** les barres de cage (29) du rotor tourné (11) sont réalisées selon leur forme originale, de préférence en forme de goutte.

8. Moteur électrique **caractérisé par** un rotor (10, 11) selon l'une quelconque des revendications 1 à 7.

9. Agencement de pompe centrifuge **caractérisé par** un moteur électrique (33) selon la revendication 8.

10. Procédé de fonctionnement d'un moteur électrique selon la revendication 8 et/ou d'un agencement de pompe centrifuge selon la revendication 9, **caractérisé en ce que** l'alimentation du moteur électrique (33) est assurée par un réseau de tension (35) à fréquence fixe.

11. Procédé de fonctionnement d'un moteur électrique selon la revendication 8 et/ou d'un agencement de pompe centrifuge selon la revendication 9, **caractérisé en ce que** l'alimentation du moteur électrique (33) est assurée par un convertisseur de fréquence (37) sans détection de la position du rotor.

12. Procédé de fabrication d'un rotor (11) selon l'une quelconque des revendications 1 à 7 ou d'un moteur électrique (33) selon la revendication 8, **caractérisé en ce que** l'on effectue sur un induit à cage d'écureuil (1, 10), sur toute la longueur du paquet de tôles, une réduction de rayon par un tournage, par lequel on réduit le rayon de celui-ci sur toute la longueur entre les bagues de court-circuit (1, 7, 17), de telle manière que la hauteur radiale de ses barres de cage (15, 29) ou des nervures de cage (27) reliées à celles-ci soit réduite, et on dépose ensuite des aimants permanents (19) sur la surface du rotor (16).

13. Procédé selon la revendication 12, **caractérisé en ce que** l'on colle les aimants permanents (19) dans l'espace libre créé par la réduction de rayon, en particulier par le tournage.

14. Procédé selon la revendication 12 ou 13, **caractérisé en ce que** les aimants permanents (19) sont magnétisés avant la mise en place ou on les magnétise après la mise en place au moyen d'une armature de magnétisation.

15. Procédé selon la revendication 12, 13 ou 14, **caractérisé en ce que** l'on pose sur les aimants permanents (19) un bandage (21) ou un manchon amagnétique pour l'immobilisation des aimants permanents (19).

16. Procédé selon la revendication 15, **caractérisé en ce que** l'on tourne également les bagues de court-circuit (17) et on fixe le bandage (21) ou le manchon amagnétique au moyen des bagues de court-circuit (17).
